# EUROPEAN PATENT APPLICATION

(11) **EP 1 215 847 A2**
(43) Date of publication of application: **19.06.2002**
(21) Application number: 01000602.1
(22) Date of filing: 08.11.2001
(51) Int. Cl.: H04L 12/28

(54) **Arranging internal data connections of office system**

(30) Priority: 15.12.2000 FI 20002754
(71) Applicant: Nokia Corporation, 02150 Espoo (FI)
(72) Inventor: Närvänen, Kai, 33960 Pirkkala (FI); Zilliacus, Petteri, 33470 Ylöjärvi (FI); Rautiola, Markku, 33820 Tampere (FI)
(74) Representative: Kaukonen, Juha Veikko

(57) **Abstract**

A method of establishing a data connection in a telecommunications system which comprises an office network and an operator network and a local area network between them. Data transmission between the office network and a public land mobile network is adapted together in the operator network. The office network comprises an interworking function to which a signalling connection from a call control entity is arranged, and the call control entity detects the establishment of an internal data connection in the office network, the data connection using a data protocol according to a mobile system. Data connections according to the data protocol and coming from a radio access gateway are adapted to the data protocol according to the office network in response to the call control entity detecting an internal data connection in the office network, the second party of the data connection being a mobile system terminal.

## Description

### BACKGROUND OF THE INVENTION

The invention relates to wireless office systems, especially to routing data connections inside the office system.

Information systems in offices are traditionally designed in such a manner that the telephone network and the data network connecting computers and their peripherals, typically a local area network, are separate networks. The development and convergence of different data networks and telephone networks on one hand and the costs arisen from building and maintaining two parallel networks on the other hand, have led to developing systems for providing the services of telephone networks through local area networks. One significant factor in this development has been an improved applicability of IP (Internet protocol) technology, used conventionally in data networks, to providing telephone services.

In a modern office information system, a mobile system can also be combined to operate through a local area network, in which case voice calls based on a mobile system protocol are routed by means of a local area network (LAN), which typically uses IP technology, through an office-specific base transceiver station (BTS), for instance, to mobile stations (MS). A conventional private branch exchange (PBX) of the office can then be bypassed, and it is also possible to ensure broadband connections at short distances and an excellent quality of speech even in wireless data transmission. Mobile stations establish a wireless connection to an office-specific base transceiver station and then through a local area network both to other mobile stations in the office and through a mobile switching centre (MSC) to external terminals, such as mobile stations outside the office system or terminals of a public switched telephone network (PSTN).

Office systems of the kind described above are also known, which support data, telefax and short message services (SMS) designed for mobile systems. Circuit-switched data services using different data rates up to 14.4 kbit/s have been defined for the European GSM (Global System for Mobile communication) mobile network, for instance. An HSCSD (High Speed Circuit-Switched Data) service using several time-slots achieves a rate of several tens of kilobits per second. The data transmission chain of the GSM system between a mobile station and the opposite party in a data connection comprises several network elements, and different data rates can be used on the interfaces between the elements. To ensure the correctness of received data, a considerable amount of error correction information must be added to data transmitted between a mobile station and a base transceiver station on an interference-sensitive air interface in particular. Thus, several data transmission rate adaptations are made to the data being transmitted on the entire length of the data transmission chain. An interworking function IWF, called transcoder/rate adaptation unit (TRAU) in the GSM system, is typically implemented to a mobile switching centre MSC. The interworking function IWF disassembles data placed in TRAU frames in the GSM system and converts the data transmission rate and the frame structure to suit another telecommunications system, if required.

A problem with the arrangement described above for the described office system is that GSM data connections must be switched to the mobile switching centre MSC, to be more exact, to the interworking function IWF in it, to be able to disassemble the data transmission rate adaptations and to switch the data connection to another telecommunications system, in other words to said office system. This means that GSM data connections must always be routed through the mobile switching centre MSC of the public land mobile network regardless of the fact that they may be internal data calls in the office system. This accrues extra costs to mobile stations in the office system and uses the capacity of the public land mobile network.

### BRIEF DESCRIPTION OF THE INVENTION

It is thus an object of the invention to develop an arrangement, by means of which a mobile station connected to an office system can establish a data connection inside the office system in such a manner that the data call need not be routed to the public land mobile network. The object of the invention is achieved by a method and arrangement characterized by what is stated in the independent claims. Preferred embodiments of the invention are set forth in the dependent claims.

The invention is based on being able to arrange that data connections inside an office system and based on a mobile protocol are established in such a manner that an interworking function IWF is adapted as part of the office system in such a manner that the office system is arranged to identify internal circuit-switched data connections in the office system, such as GSM calls, and to route these data connections through said interworking function IWF to a destination address in the office system, for instance in its local area network LAN. A data transmission connection is arranged from a radio access gateway RAGW of the office system to the interworking function IWF, from which a data transmission connection is arranged to a remote access server RAS of the local area network LAN. The interworking function IWF disassembles data placed in frames according to the GSM system already in the office system and adapts the data transmission rate and frame structure to suit the office system.

According to a preferred embodiment of the invention, the interworking function IWF can be implemented in the same network element as the radio access gateway RAGW, or it can also be an independent network element. Further, according to a preferred embodiment of the invention, the office-specific base transceiver station BTS can be integrated with the radio access gateway RAGW or alternatively, the radio access gateway RAGW can control several base transceiver stations.

The method and arrangement of the invention provide the advantage that internal circuit-switched data connections in an office system can be established using the functions of the office system only, and the data connections, such as GSM data calls, need not be routed through a switching centre of a public land mobile network, such as the GSM network. This way, mobile stations in an office system can be provided with advantageous, in practice free, circuit-switched data connections inside the office system, and the links can, if necessary, be encrypted specifically for each office system. In addition, capacity of the public land mobile network is saved, since the data connections inside an office system and based on a mobile protocol need not be routed through the public network.

### BRIEF DESCRIPTION OF THE FIGURES

In the following the invention will be described by means of preferred embodiments and with reference to the appended drawings, in which
Figure 1 is a block diagram showing the structure of the GSM system,
Figure 2 is a block diagram showing the structure of a known office information system,
Figure 3 is a block diagram showing the structure of an office information system according to a preferred embodiment of the invention,
Figure 4 is a block diagram showing the implementation of functions of the invention in an office information system of the invention,
Figure 5 shows protocol stacks used in the call establishment of the invention,
Figures 6a and 6b are block diagrams showing the positioning of the functions of the invention in an office information system of the invention,
Figure 7 is a signalling diagram of establishing a data call connection of the invention from a mobile station to an office information system, and
Figure 8 is a signalling diagram of establishing a data call connection of the invention to a mobile station.

### DETAILED DESCRIPTION OF THE INVENTION

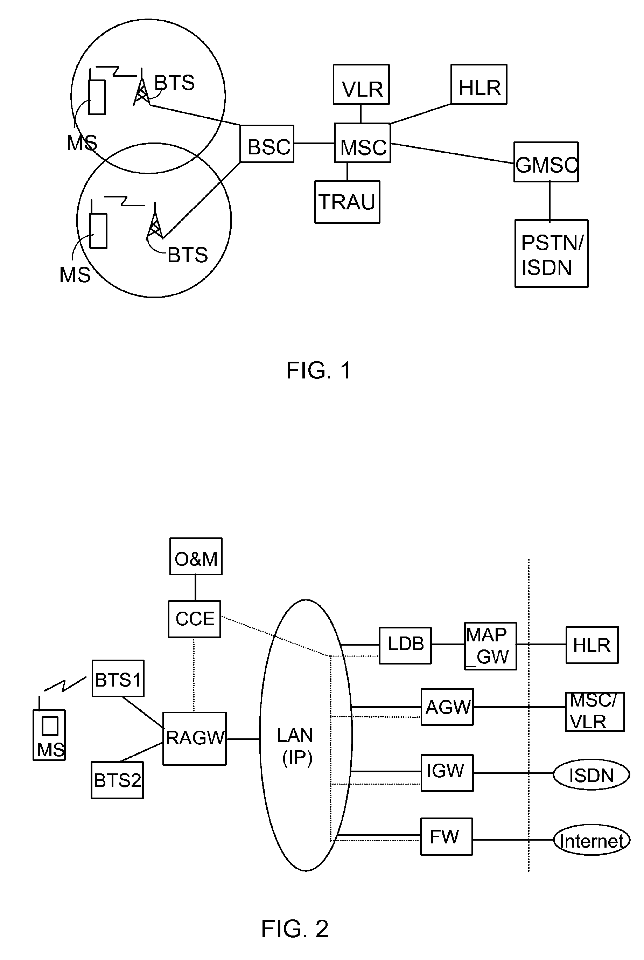

Figure 1 illustrates the structure of the GSM system. The GSM system comprises mobile stations (MS) which have a radio connection to base transceiver stations (BTS). Several base transceiver stations BTS are connected to a base station controller (BSC) which controls the radio frequencies and channels available to them. The base station controller BSC and the base transceiver stations BTS form a base station subsystem (BSS). The base station controllers BSC are connected to a mobile services switching centre (MSC) which takes care of connection establishment and call routing to correct addresses. In this, two databases containing information on mobile subscribers are used: a home location register (HLR) which contains information on all subscribers in the mobile network and the services they subscribe to, and a visitor location register (VLR) which contains information on mobile stations visiting the area of a given mobile services switching centre MSC. A transcoder/rate adaptation unit (TRAU) is typically implemented to the mobile services switching centre MSC, it is an interworking function IWF which disassembles data placed in TRAU frames and adapts the data transmission rate and frame structure to one which allows the data to be transmitted onwards. The mobile services switching centre MSC is connected to other mobile services switching centres through a gateway mobile services switching centre (GMSC) and to a public switched telephone network (PSTN). For a more detailed description of the GSM system, reference is made to the ETSI/GSM specifications and the book *The GSM system for Mobile Communications,* M. Mouly and M. Pautet, Palaiseau, France, 1992, ISBN:2-957190-07-7.

Figure 2 shows the structure of a known office information system, in which system a GSM-based mobile system is connected to operate with an IP-based local area network LAN of the office. This kind of office system can be divided into two logical parts on the basis of its functions: office network and operator network. The office network, shown on the left side of the local area network LAN in Figure 2, comprises network elements connected to the local area network of the company and comprising office-specific base transceiver stations BTS, a radio access gateway RAGW, and a call control entity CCE. To work with public telephone networks, this kind of office system requires defined interfaces which are arranged to be managed by means of the operator network and its elements, belonging to the office system. The operator network, shown on the right side of the local area network LAN in Figure 2, comprises an A-interface gateway AGW to the mobile services switching centre MSC of the GSM network and on to a PSTN/ISDN network. Connection to the ISDN network can also be established directly through an ISDN gateway IGW. The operator network also comprises a location database LDB connected to the home location register HLR of the GSM network through a mobile application part protocol gateway MAP_GW. The elements of the operator network can act as interfaces to several different office networks.

A mobile station MS used on the office network side can be genuinely according to the GSM standard, and it communicates with office-specific GSM base transceiver stations BTS1, BTS2. The base transceiver stations BTS are connected to an office-specific radio access gateway RAGW. RAGW takes care of signal conversions and the necessary data conversions between the base transceiver station BTS and the used local area network LAN. RAGW also handles handover management between the base transceiver stations BTS and controls the base transceiver station BTS and thus also the radio network and resources. As seen from the base transceiver station BTS, RAGW functions as a base station controller BSC of the GSM system. The call control entity CCE takes care of call control and mobility management for the radio access gateways RAGW within its area and the mobile stations MS visiting the area of the radio access gateways. CCE handles change of address functions and collects call data records. In addition, the call control entity CCE acts as an interface to operation and maintenance (O&M) managed by an O&M server.

The call control entity CCE also acts as a signalling interface to different elements of the operator network through the IP-based local area network LAN, which is shown by dashed lines in Figure 2. CCE can grant rights to reserve data transmission resources for a mobile station MS by utilising the location database LDB for this purpose. LDB handles different directory services, such as maintenance of information on mobile stations and subscribers and transmission of the information to CCE when necessary. LDB also maintains location updates of mobile stations MS and collects billing information from the call control entity CCE. LDB typically also has a connection to the home location register HLR of the GSM network through the MAP protocol gateway MAP_GW. In operation, LDB thus corresponds to the visitor location register VLR of the GSM system. Further, the call control entity CCE is connected to the A-interface gateway AGW which does data (speech or data flow) and signalling conversions between the local area network and the mobile services switching centre MSC of the GSM network. This way, a data transmission connection can be established between the radio access gateway RAGW and the GSM network. A second gateway of the operator network is the ISDN gateway IGW through which a direct connection to ISDN networks can be established. IP-based data transmission and reception from the office system can be done through a firewall FW to external IP-based networks, such as the Internet. By means of the firewall FW, it is easy to define the networks, sub-networks, network addresses, and applications which are allowed to establish connections to each other, and thus prevent unauthorised access to the office network.

From the GSM system viewpoint, especially its mobile services switching centre MSC, this kind of office system which comprises an office network and an operator network can be seen as one base station subsystem BSS which has its own location area code LAC. All elements of the office system reside between interfaces A, Abis and MAP defined according to the GSM system, and, on the other hand, between the network elements MSC, HLR, and BTS. Thus, the office system supports call control functions according to the GSM system and GSM data, telefax and SMS services transmitted to and from the office system.

In the office system described above, calls can be routed by using speech transmission utilising the IP protocol, i.e. VoIP (Voice over IP) solutions. The most commonly used standard in implementing IP speech is H.323 defined by ITU (International Telecommunication Union), which defines the compression of voice and video images used in video conferencing programs and call control. The H.323 standard specifies the transmission of packet-based multimedia information in systems which do not necessarily guarantee the quality of service (QoS). The H.323 standard can be applied to any IP-based (Internet protocol) network, such as the Internet. H.323 can be used in both point-to-point calls and different point-to-multipoint applications.

In the office system described above, the H.323-based IP speech transmission is done by performing a protocol conversion either in the base transceiver station BTS or radio access gateway RAGW between the protocol of a wireless telecommunications network, such as the GSM network, and the H.323 format. Speech data according to the wireless telecommunications network transmitted from a mobile station MS to the base transceiver station BTS is converted into H.323 format either in the base transceiver station BTS or the radio access gateway RAGW and correspondingly, H.323-format speech data being transmitted to a mobile station MS is converted to the format of the wireless telecommunications network. This function can be implemented in a gateway defined in the H.323 standard (H.323 gateway).

The H.323 standard contains several protocols. Depending on the application, either a reliable or a non-reliable transmission protocol, typically TCP (Transmission Control Protocol) or UDP (User Datagram Protocol) is run on top of the IP network protocol. RTP/RTCP (Real-time Transport Control Protocol) takes care of packet composition and synchronisation of media flows / control data over a packet-switched network. The H.225 protocol handles especially tasks related to connection establishment, based on Q.931 signalling. The H.245 protocol defines conference control and capability exchange messages. The H.225 protocol defines for instance RAS (Registration, Admissions and Status) messages used in finding or registering call control entities and Q.931 messages used mainly in connection establishment between peers.

A second standard used in IP speech transmission is SIP (Session Initiation Protocol) defined by IETF (Internet Engineering Task Force), which is an application-level control protocol and which the radio access gateway RAGW can support. The SIP protocol is described in greater detail in the Internet standard proposal RFC (request for comments) 2543.

The base transceiver stations BTS of the office system described above are thus base transceiver stations according to the GSM system, to which a mobile station belonging to the office system establishes a connection when in the area of the office system. However, if the user of the mobile station wants to establish a GSM data connection to the office system, typically to a local area network server or terminal belonging to it, the mobile station must first establish a connection to a switching centre MSC of a public land mobile network so as to have the interworking function IWF in the centre convert the data for transmission back to the office system. This incurs extra costs to the mobile stations belonging to the office system, and it also uses the capacity of the public land mobile network.

Now according to the invention, internal GSM data connections in an office system can be arranged to be established by adapting the interworking function IWF as part of the office system in such a manner that the office system is arranged to identify internal GSM data connections in the office system and to route these data connections through said interworking function IWF to a destination address in the office system, for instance in its local area network LAN.

According to the invention, a data transmission connection is established from the radio access gateway RAGW to the interworking function IWF, from which a data transmission connection is established to a remote access server RAS of the local area network LAN. The interworking function IWF can preferably be implemented in the same network element as the radio access gateway RAGW, or it can also be an independent network element. Further, the office-specific base transceiver station BTS can be integrated with the radio access gateway RAGW or alternatively, the radio access gateway RAGW can control several base transceiver stations.

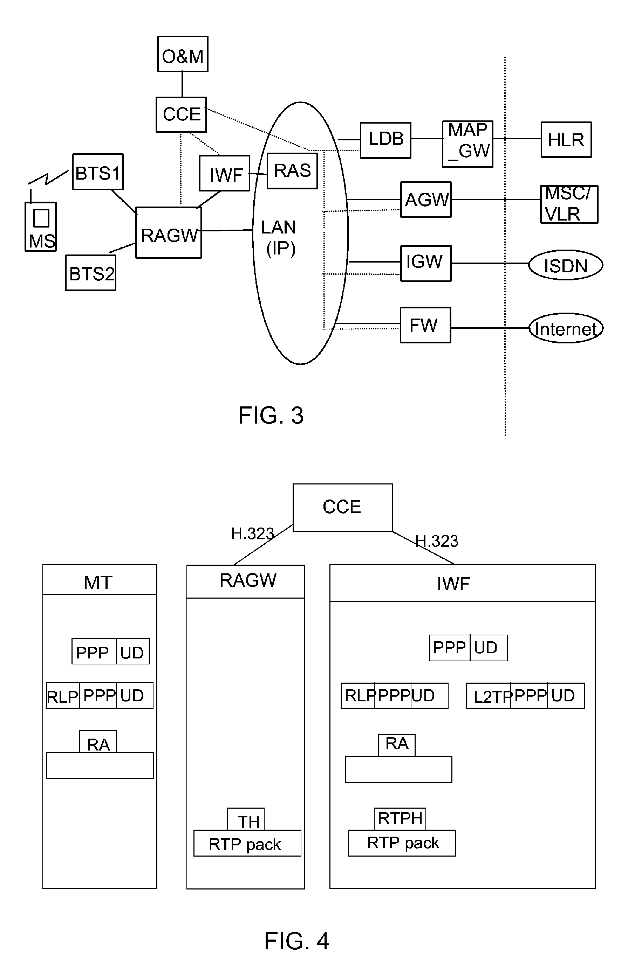

The operation and structure of an office system of the invention is illustrated in the block diagram of Figure 3. As compared with the office system of Figure 2, the radio access gateway RAGW has a data transmission connection to the interworking function IWF, to which a signalling connection is also established from the call control entity CCE. Both a data transmission connection and a signalling connection has also been arranged from the interworking function to the remote access server RAS of the office system. As described above, the different elements RAGW, IWF, and BTS can be physically implemented in several ways as one element or separate elements; the essential thing is arranging the functional connection between the elements.

When a non-transparent GSM data connection is established from a mobile station MS, the data to be transmitted is placed in RLP (Radio Link Protocol) frames. RLP is a link-level protocol based on X.25-based data transmission, which groups user data in RLP frames so that errors in data transmission can be detected and the data re-transmitted, if necessary. Because one protocol layer is responsible for the correctness of data, the heavy signalling for ensuring correctness of data between the different elements in the data transmission chain is avoided. In the GSM system, data in RLP frames is transmitted between a terminal adaptation function TAF in a mobile station and/or a data terminal connected to it and typically the interworking function IWF of a mobile services switching centre MSC. Because it is not advantageous to route an internal data connection of an office system though a public land mobile network, the RLP-framed data transmission is preferably interrupted already in the office system. This is done by means of the interworking function IWF arranged as part of the office system.

Establishing the data connection is described in the following by means of the block diagram in Figure 4. From the viewpoint of implementing the invention, the office-specific base transceiver station BTS can be considered to be transparent, so it is not shown in Figure 4. A mobile station and/or a data terminal MT connected to it uses a data application, and a PPP (Point-to-Point Protocol) header field defined according to the X.25 protocol, for instance, is attached to the user data UD formed by the data application. The thus formed data is then placed in 240-bit RLP frames which comprise a 16-bit header field, 200-bit user data field, and 24-bit frame check sequence FCS for detecting errors on the transmission path. The data placed in RLP frames and typically having a data transmission rate of 4.8, 9.6 or 14.4 kbit/s is rate-adapted RA in such a manner that data transmission over the radio interface (not shown) formed from the mobile station MS to the base transceiver station BTS always occurs according to the GSM specifications at a rate of 22.8 kbit/s.

The radio access gateway RAGW receives from the base transceiver station BTS said data frames (TRAU frames) to which both RLP adaptation and rate adaptation has been performed. The radio access gateway RAGW comprises a traffic handler TH which detects data calls directed to a destination address in the office system. The radio access gateway RAGW has a H.323 signalling connection to the call control entity CCE to which information on establishing a data call is transmitted. The call control entity CCE defines an address for the traffic handler TH, to which address the data packets should be routed. In addition, the call control entity CCE can, if necessary, at this stage authenticate the subscriber and check the subscriber's access rights, on the basis of which the data call can be directed to the office system. In response to this, the traffic handler TH removes the TRAU frames from the traffic channel and fits them to RTP frames for the H.323 protocol of the office system.

A data connection applying the RLP protocol is defined using control bits M, of which there are five (M1 to M5) at a data rate of 9.6 kbit/s or lower and which are added as part of the header field of an RLP frame. At a rate of 14.4 kbit/s, however, there are only two control bits in use, M1 and M2, and they are added as part of a TRAU frame. Thus, when using a data rate of 14.4 kbit/s, the traffic handler TH described above must also make sure that said control bits M1 and M2 are removed from the TRAU frame and added as part of the RTP frame.

The call control entity CCE also has a H.323 signalling connection to the interworking function IWF, to which information on the data call to be established is also signalled. The interworking function IWF receives from the radio access gateway RAGW data fitted into RTP frames, which is taken to an RTP handler RTPH. The task of this handler is to disassemble data fitted into RTP frames and make it suitable for a data transmission rate adaptation RA. Between the radio access gateway RAGW and the interworking function IWF, it is also possible, instead of the RTP protocol, to use the T.120 protocol, for instance, which is a data interface defined in the H.323 especially for conference call applications using data properties. By data rate adaptation RA, user data fitted into RLP frames is brought to the level required by the interworking function IWF of the GSM system, which means that a connection based on the RLP protocol can be ended in the same manner as in the interworking function IWF of a mobile services switching centre MSC. The user data with its PPP header is separated from the RLP frames, after which the interworking function IWF fits the user data to the L2TP (Layer 2 Tunnelling protocol) protocol required by the remote access server RAS. The L2TP protocol is a point-to-point tunnelling protocol which enables the tunnelling of several simultaneous connections between peers and in which data transmission is also possible on other than IP-based connections, such as Frame Relay, ATM and X.25 connections.

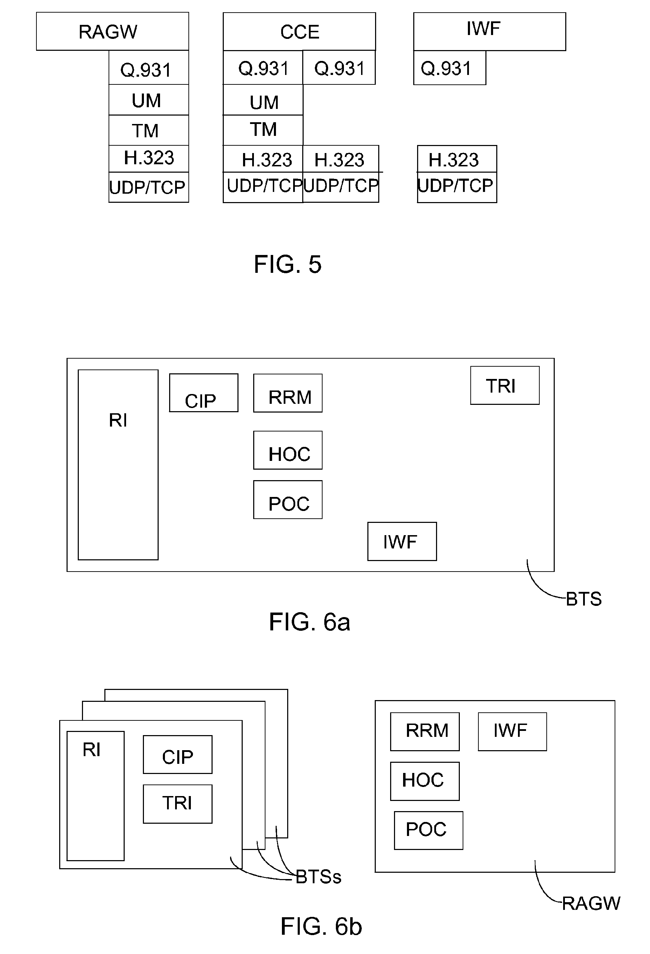

In the procedure of the invention described above, the call control entity CCE only takes part in establishing and ending a data call. From the viewpoint of the call control entity CCE, the interworking function IWF is only one element in the office system, supporting the H.323 protocol. Q.931 signalling is preferably used in call establishment signalling, in which case the signalling interfaces from the call control entity CCE to both the radio access gateway RAGW and the interworking function IWF can be illustrated by the protocol stacks of Figure 5. The lowest level is a transport protocol, either UDP or TCP. The next layer is an H.323 layer which can preferably be the H.225 layer, for instance, and the messages of a higher layer are fitted into packets according to it. Signalling messages from the radio access gateway RAGW are signalling messages according to the GSM protocol and shown by layers TM (terminal message) and UM (user message). Terminal messages TM correspond to definitions related to GSM radio resource management (RR) and user messages to those related to mobility management (MM). The signalling between the call control entity CCE and the interworking function IWF uses signalling specific to the office system, i.e. typically H.323-based signalling, which does not have the GSM protocol layers described above. The topmost signalling layer is the Q.931 layer.

Information on all calls arriving from the base transceiver station BTS to the radio access gateway RAGW is signalled to the call control entity CCE. An office system of the invention can preferably utilise this in such a manner that data calls of mobile stations belonging to the office system directed to addresses of the office system are detected by the call control entity CCE. CCE detects that the call is a data call (call type in the SetUp message) and its B subscriber (destination address) is an internal data server, in which case the call control entity CCE instructs the radio access gateway RAGW of the office system to route the call to the interworking function of the office system and onward through protocol adaptation to the destination address. This way, the internal GSM data connections of the office system can be established without needing to route the data calls through the public GSM network. This way, mobile stations in an office system can be provided with cheap, in practice free, data call links inside the office system. Further, capacity of the public GSM network is saved when internal data calls of an office system need not be routed through the switching centre MSC of the public network. Correspondingly, connection establishment requests of mobile stations not belonging to the office system, directed to a destination address of the office system, are directed to the switching centre MSC of the public GSM network and, as necessary, on to the destination address in the office system. Subscriber authentication can preferably be performed in the office system and if the mobile subscriber does not belong to the office system, the call is directed to the switching centre MSC of the GSM network, where authentication can, if necessary, be performed again according to the GSM system.

From the viewpoint of the office-specific base transceiver station BTS, the functional combination of elements described above can, in principle, be done in two ways which are illustrated in Figures 6a and 6b. In Figure 6a, both the radio access gateway RAGW and the interworking function IWF are combined to one office-specific base transceiver station BTS. The functions of the base transceiver station include arranging a radio interface RI and ciphering CIP. The base transceiver station BTS also comprises functions typically belonging to the radio access gateway RAGW, such as radio resource management RRM, handover control HOC and power control POC. The functions of the interworking function IWF are also implemented in the base transceiver station BTS. In addition, the base transceiver station BTS comprises a traffic interface TRI which can, for instance, be the H.323 gateway described above and which provides an H.323-based VoIP (Voice over IP) connection between the base transceiver station and the rest of the office system.

In Figure 6b, one radio access gateway RAGW controls several office-specific base transceiver stations BTS. Then, only the interworking function IWF has been connected to the radio access gateway RAGW and the functions it comprises (RRM, HOC, POC). The functions typically belonging to a base transceiver station, the radio interface RI and ciphering CIP, then remain in each base transceiver station BTS, and, in addition, the H.323-based traffic interface TRI can also be implemented separately for each base transceiver station. In the case of both Figure 6a and 6b, the radio access gateway RAGW and the interworking function IWF can utilise the same signalling connection to the call control entity CCE.

In addition to the alternatives presented in Figures 6a and 6b, the interworking function IWF can also be implemented as a separate network element, in which case it acts as a H.323 gateway between the radio access gateway RAGW and the local area network LAN. Separate signalling connections have then been arranged from the call control entity CCE to the radio access gateway RAGW and the interworking function IWF, and each signalling can preferably be performed using the Q.931 signalling protocol belonging to the H.323 protocol.

Mobile stations can establish a data connection either only to a remote access server RAS and its services and files (a point-to-point remote access) or to the network, typically local area network LAN, to which the remote access server is connected (a point-to-LAN remote access). In both cases, the mobile stations can establish the desired data connection from outside the office network in such a manner that their operation corresponds in principle to physical connection to the server or network in question. As regards connection establishment, remote access to the remote access server RAS can in principle be established in two ways: either as a dial-up connection or as a virtual private network (VPN) connection. In a dial-up connection, the mobile station utilises telephone networks by establishing a telephone connection, typically a circuit-switched connection, to a port of the remote access server RAS. When the physical telephone connection has been established, other connection parameters can be negotiated. In a virtual private network VPN connection, the mobile station utilises IP-based networks, such as the Internet, by establishing a virtual point-to-point connection to the remote access server acting as a VPN server. When the virtual point-to-point connection has been established, other connection parameters can be negotiated.

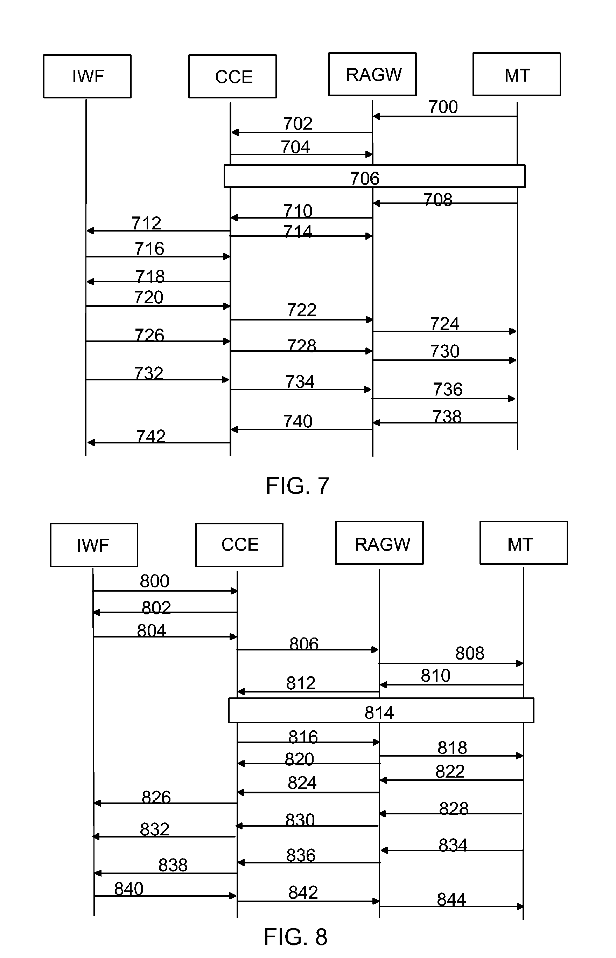

In the following, data call establishment according to the invention from a mobile station MS to an office system (mobile originated call) and correspondingly, call establishment to a mobile station (mobile terminated call) is described by means of the signalling diagrams in Figures 7 and 8. In these examples, the radio access gateway RAGW and the interworking function IWF are shown as separate network elements to clarify signalling. An office-specific base transceiver station BTS can be thought to be transparent to the signalling used in the examples, so the base transceiver station is not shown at all.

The signalling diagram of Figure 7 shows the establishment of a data call from the mobile station. The mobile station MS transmits a GSM connection establishment request (CM_Service_Req, 700) to the radio access gateway RAGW which transmits a capacity request (ARQ, 702) including said GSM connection establishment request to the call control entity CCE. The call control entity allocates capacity (ACF, 704) for the use of the mobile station MS and can also set a ciphering (706) to be used on the data call connection. The mobile station MS transmits a call establishment message (SetUp, 708) to the radio access gateway RAGW, which message is forwarded on through the call control entity CCE to the interworking function IWF (710, 712). At the same time, the call control entity CCE also transmits a first call connection message (Call_Proc, 714) to the radio access gateway RAGW. When the interworking function IWF receives the call establishment message (SetUp, 712), it, too, transmits a capacity request (ARQ, 716) to the call control entity CCE. The call control entity CCE allocates capacity (ACF, 718) for the interworking function IWF for said data call, and the interworking function IWF replies by transmitting a call connection message (Call_Proc, 720). The call control entity CCE now transmits a second call connection message (Q.931_Call_Proc, 722) to the radio access gateway RAGW, and terminal connection parameters defined in response to the capacity request of the interworking function are added to the second call connection message. The radio access gateway RAGW must also wait for this second call connection message before it can transmit an acknowledgement to the mobile station on connecting the call (Call_Proc, 724). The interworking function alerts the mobile station (Alert, 726, 728, 730) and connects the call (Connect, 732, 734, 736), which the mobile station acknowledges (Connect_Ack, 738, 740, 742). When a traffic channel has thus been established between the interworking function IWF and the mobile station MS, an RLP-based connection can be opened.

The signalling diagram of Figure 8 illustrates data call establishment from an office system to a mobile station. The interworking function IWF transmits a capacity request (ARQ, 800) to the call control entity CCE which allocates capacity (ACF, 802) defined with suitable parameters for the data call connection. The interworking function IWF transmits a call establishment message (SetUp, 804) to the call control entity CCE which transmits a paging message (Paging, 806, 808) through the radio access gateway RAGW to the mobile station MS. The mobile station acknowledges the paging message (Paging_Resp, 810, 812), and in response to it, the call control entity can set a ciphering (814) to be used on the data call connection. The call control entity CCE transmits a call establishment message (SetUp, 816, 818) through the radio access gateway RAGW to the mobile station MS. At the same time as the radio access gateway RAGW forwards the call establishment message to the mobile station MS, it also transmits a first call connection message (Call_Proc, 820) to the call control entity CCE. When the mobile station MS receives the call establishment message (SetUp, 818), it transmits a call connection message (Call_Proc, 822) to the radio access gateway RAGW. The radio access gateway RAGW now transmits a second call connection message (Q.931_Call_Proc, 824) to the call control entity CCE, and terminal connection parameters defined in the call establishment message (SetUp, 818) of the mobile station are added to the second call connection message. The call control entity CCE must also wait for this second call connection message before it can transmit an acknowledgement (Q.931_Call_Proc, 826) to the interworking function on connecting the call. The mobile station MS alerts (Alert, 828, 830, 832) the interworking function IWF and connects the call (Connect, 834, 836, 838), which the interworking function acknowledges (Q.931_Connect_Ack, 840, 842, Connect_Ack, 844).

The invention has been described above with an office system based on the GSM mobile system in particular. It is obvious to a person skilled in the art that a corresponding solution can be applied to any corresponding office system, especially when the frame structure of data services used in the mobile station is arranged to be disassembled in a network element which typically does not belong to said office system. Thus, the implementation of the invention is not dependent on the used mobile system, but the invention can be applied to an office system implemented using the UMTS (Universal Mobile Telephone System) system, for instance.

It is obvious to a person skilled in the art that while technology advances, the basic idea of the invention can be implemented in many different ways. The invention and its embodiments are thus not restricted to the examples described above, but can vary within the scope of the claims.

## Claims

1. A telecommunications system which comprises an office network and an operator network and a local area network between them, the office network comprising at least one mobile system terminal, a base transceiver station, a radio access gateway controlling the base transceiver station and adapted to have a functional connection with the local area network and arranged to adapt the data transmission protocols of said mobile system and local area network to each other, and a call control entity which is arranged to control said radio access gateway through a signalling connection; the operator network being arranged to adapt data transmission between the office network and a public land mobile network together, **characterized in that**
said call control entity is arranged to detect the establishment of an internal data connection in the office network, which data connection uses a data protocol according to said mobile system, and
said office network also comprises an interworking function to which a signalling connection from said call control entity is arranged and which is arranged to adapt data connections according to the data protocol of at least said mobile system and coming from the radio access gateway to the data protocol according to said office network in response to the call control entity detecting the establishment of an internal data connection in the office network, at least the second party of the data connection being said mobile system terminal.

2. A telecommunications system as claimed in claim 1, **characterized in that** it comprises
a location database for registering terminals belonging to the office network and for managing location and subscriber information,
and in response to a data connection establishment request made by the terminal, the call control entity is arranged to authenticate the subscriber of the terminal and alternatively
to direct the radio access gateway to route the data connection to said interworking function in response to said subscriber of the terminal being registered into the office network, or
to direct the radio access gateway to route the data connection through the operator network to a switching centre of the public land mobile network in response to the subscriber of the terminal not being registered into the office network.

3. A telecommunications system as claimed in claim 1 or 2, **characterized in that**
said office-specific base transceiver station, radio access gateway and interworking function are implemented as one element of the telecommunications system.

4. A telecommunications system as claimed in claim 1 or 2, **characterized in that**
said radio access gateway and interworking function are implemented as one element of the telecommunications system in such a manner that the element is arranged to control one or more office-specific base transceiver stations.

5. A telecommunications system as claimed in claim 1 or 2, **characterized in that**
said office-specific base transceiver station, radio access gateway and interworking function are implemented as separate elements of the telecommunication system in such a manner that the radio access gateway is arranged to control one or more office-specific base transceiver stations.

6. A telecommunications system as claimed in any one of the preceding claims, **characterized in that**
said data protocol according the mobile system is a GSM protocol and said data protocol of the office network is a H.323 protocol, and
the radio access gateway is arranged to adapt data frames according to the GSM protocol in the user data into RTP frames and
the interworking function is arranged to disassemble said RTP frames and to adapt the user data into frames according to the data protocol of the office network.

7. A telecommunications system as claimed in any one of the preceding claims, **characterized in that**
a remote access server is arranged to function as an interface between the office network and the local area network, and the interworking function is arranged to transmit user data adapted to frames according to the data protocol of the office network to the remote access network.

8. A telecommunications system as claimed in claim 7, **characterized in that**
a terminal registered into the office network is arranged to establish a data connection to said remote access server from outside said office network as a dial-up connection.

9. A telecommunications system as claimed in claim 7, **characterized in that**
a terminal registered into the office network is arranged to establish a data connection to said remote access server from outside said office network as a virtual private network (VPN) connection.

10. A method of establishing a data connection in a telecommunications system which comprises an office network and an operator network and a local area network between them, the office network comprising at least one mobile system terminal, a base transceiver station, a radio access gateway controlling the base transceiver station and adapted to have a functional connection with the local area network, and a call control entity, in which method, said radio access gateway is controlled by the call control entity through a signalling connection, and the data transmission protocols of said mobile system and local area network are adapted to each other in said radio access gateway, and data transmission between the office network and a public land mobile network is adapted together in said operator network, **characterized in that** said office network also comprises an interworking function to which a signalling connection from said call control entity is arranged, whereby
establishment of an internal data connection in the office network is detected by said call control entity, the data connection using a data protocol according to said mobile system, and
data connections according to the data protocol of at least said mobile system and coming from the radio access gateway are adapted to the data protocol according to said office network in response to the call control entity detecting the establishment of an internal data connection in the office network, at least the second party of the data connection being said mobile system terminal.

11. A method as claimed in claim 10, **characterized in that** the telecommunications system comprises a location database for registering terminals belonging to the office network and for managing location and subscriber information,
the call control entity authenticates the subscriber of the terminal in response to the data connection establishment request made by the terminal, and alternatively
the radio access gateway is directed to route the data connection to said interworking function in response to said subscriber of the terminal being registered into the office network, or
the radio access gateway is directed to route the data connection through the operator network to a switching centre of the public land mobile network in response to the subscriber of the terminal not being registered into the office network.
